# NOUVEAU FASCICULE DE BREVET EUROPEEN

(11) **EP 0 515 243 B2**
(45) Date de publication et mention de la décision concernant l'opposition: **24.11.1999**
(45) Mention de la délivrance du brevet: 20.12.1995
(21) Numéro de dépôt: 92401282.6
(22) Date de dépôt: 12.05.1992
(51) Int. Cl.: F16D 11/10, F16D 23/04

(54) **Synchroniseur de boîte de vitesses**
Synchronisiereinrichtung für Schaltgetriebe
Synchronizer for gearbox

(30) Priorité: 24.05.1991 FR 9106261
(43) Date de publication de la demande: 25.11.1992
(73) Titulaire: REGIE NATIONALE DES USINES RENAULT S.A., 92109 Boulogne Billancourt (FR)
(72) Inventeur: Richard, Jackie, F-95870 Bezons (FR); Sanchez, Joseph, F-93110 Rosny-s/-Bois (FR)

(56) Documents cités:
- CH-A- 305 510
- DE-B- 2 603 826
- DE-C- 1 137 909
- DE-C- 2 659 448
- FR-A- 1 568 161
- FR-A- 2 250 404
- GB-A- 877 627
- US-A- 3 548 983
- PATENT ABSTRACTS OF JAPAN vol. 7, no. 271 (M-260)(1416) 3 Décembre 1983, & JP-A-58 149 421 (DAIHATSU) 5 Septembre 1983

## Description

L'invention se rapporte aux synchroniseurs de boîte de vitesses manuelle dont la fonction essentielle est d'égaliser par frottement les vitesses d'un arbre de la boîte et d'un pignon fou de vitesses, avant de réaliser le crabotage de ces deux organes par leurs dentures respectives.

Plus précisément, cette invention vise à perfectionner un synchroniseur du type "BORG WARNER". L'architecture du synchroniseur "BORG WARNER", illustrée par de nombreuses publications dont la publication FR 89606, est aujourd'hui encore largement utilisée, en raison de ses qualités de simplicité et de robustesse. Un tel synchroniseur comporte principalement un manchon baladeur, se déplaçant sous la commande d'une fourchette le long d'un moyeu claveté sur un arbre de sortie de boîte de vitesses, de façon à venir craboter la denture d'un pignon de vitesse monté fou sur l'arbre, après avoir rencontré celle d'un anneau de synchronisation.

Dans ce type de synchroniseur, les dents du baladeur interviennent donc deux fois au cours de l'engagement d'une vitesse par le conducteur. Leur première intervention permet d'égaliser ou "synchroniser" les vitesses des éléments à craboter, tandis que leur seconde intervention réalise le crabotage de ces deux éléments.

La publication DE 2659 448 décrit un tel synchroniseur, dans lequel, de façon classique, les dents du baladeur présentent à leur extrémité un angle d'attaque saillant orienté radialement en direction du pignon, et en arrière de cette extrêmité, des épaulements de retenue du pignon.

En vue de réduire la course du levier de changement de vitesses, cette publication prévoit de rallonger certaines dents du baladeur en direction du pignon, en dotant également celles-ci d'un angle d'attaque plus étroit que les autres.

Toutefois, selon cette publication, les dents les plus courtes du baladeur ne viennent pas en contact avec celles du pignon, de sorte que la transmission du couple entre le baladeur et le pignon n'est pas répartie de manière continue sur toutes les dents du baladeur.

La présente invention vise à supprimer cet inconvénient.

Elle propose dans ce but que les épaulements de toutes les dents soient alignés.

Selon un mode de réalisation de l'invention, le baladeur présente des secteurs de dents à angle d'attaque étroit alternés avec des secteurs de dents à angle d'attaque ouvert.

Selon un mode de réalisation de l'invention, le baladeur présente des secteurs de dents à angle d'attaque étroit, des secteurs sans dents et des secteurs de dents à angle d'attaque ouvert, se succèdant régulièrement sur sa périphérie.

Selon un mode de réalisation de l'invention, le baladeur présente trois secteurs de dents à angle d'attaque étroit et trois secteurs de dents à angle d'attaque ouvert.

L'invention sera mieux comprise à la lecture d'un mode de réalisation particulier de celle-ci, en liaison avec les dessins annexés sur lesquels :
- la figure 1A est une vue éclatée du synchroniseur de l'invention,
- la figure 1B est une vue de détail de la denture du baladeur,
- la figure 2 présente une coupe partielle du baladeur en position de fonctionnement vis à vis d'un anneau de synchronisation et d'un pignon de vitesse,
- les figures 3A et 3B illustrent de façon schématique l'engagement des dents du baladeur entre celles de l'anneau de synchronisation.

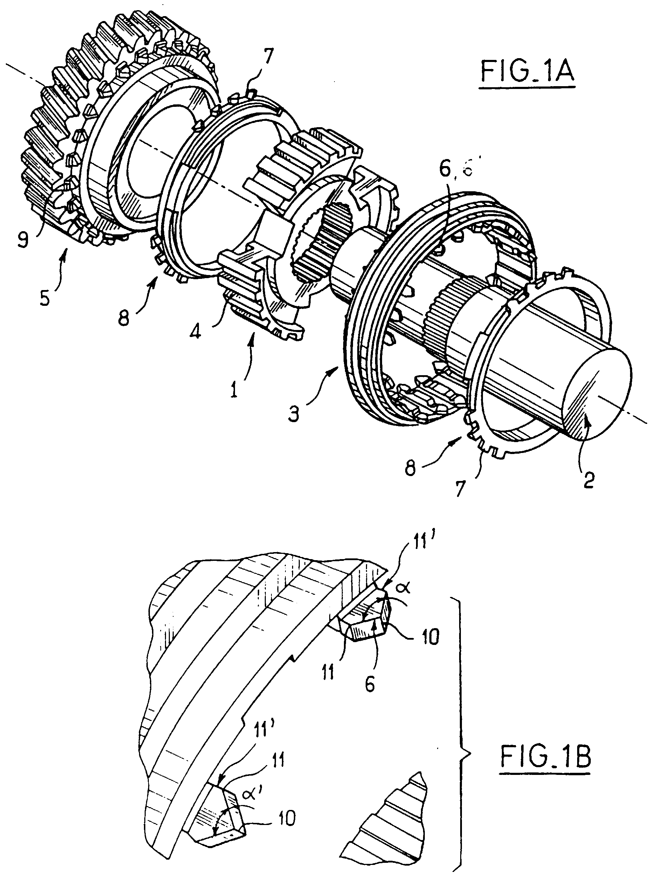

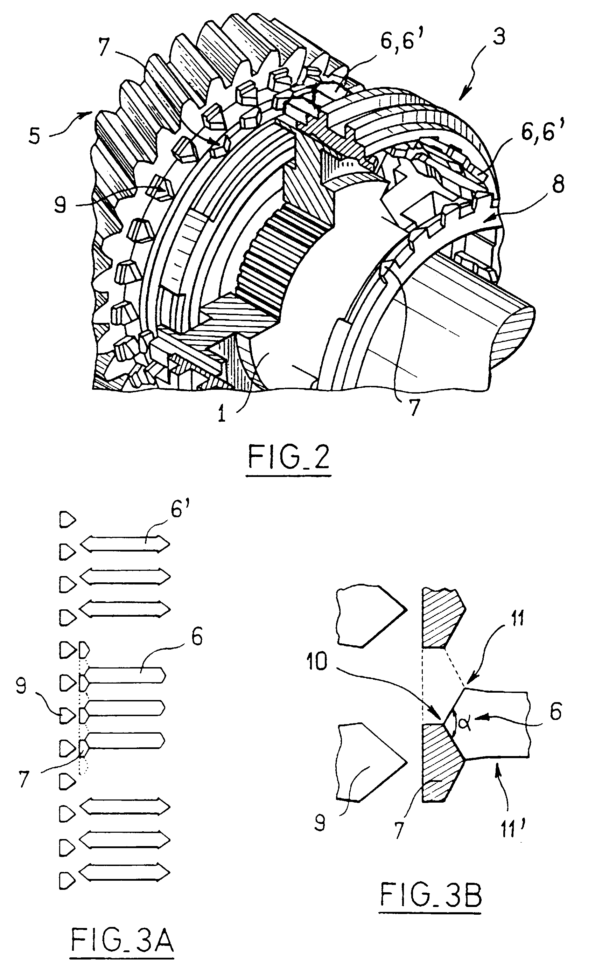

Le synchroniseur représenté sur les figures 1 et 2, comporte un baladeur 3 muni de dents d'accouplement 6, 6', guidé en coulissement axial le long de la denture extérieure d' un moyeu 1 fixé sur un arbre de sortie 2 de la boîte, ce baladeur 3 étant solidaire en rotation du moyeu 1. Sous la commande d'une fourchette de boîte de vitesses non représentée, le baladeur 3 peut donc se déplacer le long du moyeu 1 en direction d'un premier pignon de vitesse 5 apparaissant sur la figure 1A, ou d'un second pignon 5' non représenté, symétrique du premier par rapport au baladeur 3. Dans ces deux hypothèses, les dents 6, 6' du baladeur 3 viendront en contact avec les dents 7 d'un anneau de synchronisation 8, avant de rencontrer les dents 9 du pignon fou 5 . La figure 1B met en évidence que les dents 6,6' du baladeur 3 présentent à leur extrémité 10 un angle d'attaque α,α', saillant orienté axialement en direction en direction de l'anneau 8 et du pignon 5 . En arrière de cette extrémité 10 les dents 6,6' du baladeur 3 présentent des épaulements latéraux 11 légèrement en saillie par rapport à leurs flancs 11'. Ces épaulements 11 exercent de façon connue une fonction de retenue dite d' "antilâcher" des dents 6, 6' après leur crabotage avec les dents 9 du pignon 5.

Le fonctionnement du synchroniseur de l'invention est donc identique à celui d'un synchroniseur BORG WARNER classique. Lors du déplacement du baladeur 3 en direction du pignon 5, ses dents 6, 6' rencontrent préalablement la denture 7 d'un anneau de synchronisation 8. Comme on aura pu l'observer sur la figure 1b, les angles d'attaque α,α' des dents 6, 6' ne sont pas identiques. En effet certaines dents 6 présentent un angle d'attaque a déterminé en fonction de la géométrie des dents 7 de l'anneau 8 de synchronisation, tandis que d'autres dents 6' sont adaptées à l'entrée de denture 9 du pignon fou 5. On sait que lors de l'engagement de la denture 6, 6' du baladeur 3 dans celle de l'anneau de synchronisation 8, les vitesses du pignon 5 et de l'anneau 8, et donc du baladeur 3, sont différentes, la phase de synchronisation ayant pour objet l'égalisation de ces vitesses avant le crabotage du baladeur 3 par le pignon 5. Ensuite, lorsque la phase de synchronisation est achevée, l'anneau 8 dévie latéralement sous la poussée des dents 6 du baladeur de façon à "désinterdire" l'entrée de la denture 9 du pignon 5. A ce stade de l'engagement, l'anneau 8 n'est plus maintenu en poussée par le baladeur 3 contre le pignon 5, et reprend de la vitesse par rapport à celui-ci : cette étape de reprise de vitesse préalable au crabotage du baladeur 3 et du pignon 5 dite "de vol libre" est ressentie désagréablement comme un flottement par le conducteur.

L'invention permet de réduire la phase du vol libre. La solution proposée est d'adapter l'angle d'attaque a de certaines dents 6 du baladeur à la géométrie des dents 7 de l'anneau 8 de synchronisation et d'adapter l'angle d'attaque α' d'autres dents 6' du baladeur 3 à la géométrie des dents 9 du pignon fou 5. On pourra par exemple prévoir, comme dans l'exemple de réalisation illustré par les figures, que les dents 6 adaptées à celles de l'anneau de synchronisation 8 présentent un angle d'attaque α plus ouvert que l'angle α' des dents 6' adaptées à la denture 9 du pignon 5.

Une disposition avantageuse des dents 6, 6' sur le baladeur 3, consiste à prévoir trois secteurs de dents 6 à angle d'attaque étroit α', trois secteurs sans dents, et trois secteurs de dents 6' à angle d'attaque ouvert α, répartis régulièrement sur la circonférence de celui-ci.

Comme on l'a précisé plus haut les dents 6, 6' du baladeur 3 de l'invention présentent de façon classique des épaulements 11 latéraux légèrement en saillie, en arrière de l'extrémité 10 d'attaque. Une caractéristique importante de l'invention, consiste à aligner ces épaulements 11 sur la circonférence du baladeur 3 pour l'ensemble des dents 6, 6'. Cette disposition garantit en effet une retenue efficace du baladeur après son crabotage avec le pignon.

En conclusion, l'invention permet de façon simple, grâce à la différenciation des angles d'attaque des dents du baladeur, d'optimiser la phase de synchronisation et de réduire la phase de vol libre, sans dégrader l'opération de crabotage du pignon. Elle peut être appliquée sur tous les synchroniseurs de type BORGWARNER, de façon à améliorer le "confort" des passages de vitesses

## Revendications

1. Synchroniseur de boîte de vitesses comportant un moyeu (1) fixé sur un arbre de sortie (2) de boîte, et un baladeur (3) guidé en coulissement axial sur le moyeu (1) par la denture extérieure de celui-ci, de façon à rendre solidaire l'arbre (2), d'un pignon fou de vitesse (5), le baladeur étant muni sur sa périphérie de dents (6,6') destinées à rencontrer la denture (7) d'un anneau de synchronisation (8), avant de s'engager dans la denture complémentaire (9) du pignon (5), les dents (6, 6') présentant à leur extrémité (10) un angle d'attaque saillant (α,α') orienté axialement en direction du pignon (5) plus ouvert sur certaines dents (6) que sur d'autres dents (6'), et présentant en arrière de cette extrémité (10) des épaulements latéraux (11) de retenue du pignon (5), caractérisé en ce que les épaulements (11) de toutes les dents (6, 6') sont alignés.

2. Synchroniseur selon la revendication 1, caractérisé en ce que le baladeur (3) présente des secteurs de dents (6 ) à angle d'attaque étroit (α') alternés avec des secteurs de dents (6') à angle d'attaque ouvert (α).

3. Synchroniseur selon la revendication 2, caractérisé en ce que le baladeur (3) présente des secteurs de dents (6') à angle d'attaque étroit (α') des secteurs sans dents et des secteurs de dents (6) angle d'attaque ouvert (α) se succédant régulièrement sur sa périphérie.

4. Synchroniseur selon la revendication 3, caractérisé en ce que le baladeur présente trois secteurs de dents à angle d'attaque ouvert (α) et trois secteurs de dents (6') à angle d'attaque étroit (α').

## Claims

1. A gearbox synchroniser comprising a hub (1) fixed on a gearbox output shaft (2) and a sliding sleeve (3) guided for axial sliding movement on the hub (1) by way of the external tooth arrangement thereof so as to fix the shaft (2) with respect to an idle gear pinion (5), the sliding sleeve being provided on its periphery with teeth (6, 6') intended to meet the tooth arrangement (7) of a synchronising ring (8) before engaging into the complementary tooth arrangement (9) of the pinion (5), the teeth (6, 6') having at their end (10) a projecting angle of attack (α, α') oriented axially in the direction of the pinion (5) and more open on some teeth (6) than on other teeth (6') and having rearwardly of said end (10) lateral shoulders (11) for retaining the pinion (5) characterised in that the shoulders (11) of all the teeth (6, 6') are aligned.

2. A synchroniser according to claim 1 characterised in that the sliding sleeve (3) has sectors of teeth (6) with a narrow angle of attack (α') which are alternated with sectors of teeth (6') with an open angle of attack (α).

3. A synchroniser according to claim 2 characterised in that the sliding sleeve (3) has sectors of teeth (6') with a narrow angle of attack (α'), sectors without teeth and sectors of teeth (6) with an open angle of attack (α') which occur in regular succession on its periphery.

4. A synchroniser according to claim 3 characterised in that the sliding sleeve has three sectors of teeth with an open angle of attack (α) and three sectors of teeth (6') with a narrow angle of attack (α').

## Patentansprüche

1. Synchronisiereinrichtung für Schaltgetriebe, mit einer Nabe (1), die an einer Ausgangswelle (2) des Schaltgetriebes befestigt ist, mit einer Schaltmuffe (3), die axial gleitend auf der Nabe (1) über deren Außenverzahnung derart geführt wird, daß eine feste Verbindung mit der Welle (2) entsteht und mit einem Freilaufritzel (5), wobei die Schaltmuffe an ihrem Umfang mit Zähnen (6, 6') versehen ist, zum Eingriff in die Verzahnung (7) eines Synchronisierringes (8) vor dem Eingriff in die komplementäre Verzahnung 9 des Ritzels (5) und wobei die Zähne (6, 6') an ihrem Ende (10) einen hervorspringenden Eingriffswinkel (α, α') aufweisen, der radial in Richtung Ritzel (5) ausgerichtet ist und für bestimmte Zähne (6) stumpfer ist als für andere Zähne (6') und die hinter diesem Ende (10) seitliche Schultern (11) für einen Anschlag des Ritzels (5) aufweisen, dadurch gekennzeichnet, daß die Schultern (11) aller Zähne (6, 6') zueinander ausgerichtet sind.

2. Synchronisiereinrichtung nach Anspruch 1, dadurch gekennzeichnet, daß die Schaltmuffe (3) Abschnitte mit Zähnen (6) mit spitzem Eingriffswinkel (α') aufweisen, welche sich mit Abschnitten mit Zähnen (6') mit stumpfem Eingriffswinkel (α) abwechseln.

3. Synchronisiereinrichtung nach Anspruch 2, dadurch gekennzeichnet, daß die Schaltmuffe (3) Abschnitte mit Zähnen (6') mit spitzem Eingriffswinkel (α'), Abschnitte ohne Zähne und Abschnitte mit Zähnen (6) mit stumpfem Eingriffswinkel (α) aufweisen, die regelmäßig entlang des Umfangs aufeinanderfolgen.

4. Synchronisiereinrichtung nach Anspruch 3, dadurch gekennzeichnet, daß die Schaltmuffe drei Abschnitte mit Zähnen mit stumpfem Eingriffswinkel (α) und drei Abschnitte mit Zähnen (6') mit spitzem Eingriffswinkel (α') aufweist.
